# EUROPEAN PATENT SPECIFICATION

(11) **EP 0 750 460 B1**
(45) Date of publication and mention of the grant of the patent: **16.12.1998**
(21) Application number: 95910558.6
(22) Date of filing: 06.03.1995
(51) Int. Cl.: A23D 7/05, A23D 7/015, A23G 3/00

(54) **LOW-FAT EMULSION PROCESSING**
VERFAHREN ZUR HERSTELLUNG EINER FETTARMER EMULSION
TRAITEMENT D'EMULSIONS ALLEGEES EN GRAISSES

(30) Priority: 14.03.1994 US 212482
(43) Date of publication of application: 02.01.1997
(73) Proprietor: LODERS CROKLAAN B.V., NL-1521 AX Wormerveer (NL)
(72) Inventor: CAIN, Frederick, William, NL-2271 VL Voorburg (NL); WESDORP, Leendert, Hendrik, NL-3123 PN Schiedam (NL); HUTSON, Gina, Suzette, Baltimore, MD 21244 (US)
(74) Representative: Sikken, Antonius H. J. M.
(86) International application number: PCT/EP95/00830
(87) International publication number: WO 95/24831

(56) References cited:
- EP-A- 0 341 771
- EP-A- 0 394 013
- EP-A- 0 547 658
- US-A- 4 410 552
- US-A- 4 478 867
- US-A- 4 849 243

## Description

In our European Patent Application 547,658 we have disclosed low-calorie confectionery filling compositions comprising a fat-continuous emulsion having a fat content of 5-50 wt.%, while the water content of the remainder is 10-60 wt.%, the remainder further consisting of at least one of the following compounds : acidity regulator (controller), thickener, bulking agent, emulsifier, sweetener, flavour, colorant, humectant and preservative.

According to this document, the above-mentioned compositions are prepared by making a pre-mix at 60°C and passing the pre-mix through a Votator C unit and then through a total of five Votator A units, the flow rate applied being 25 g/min. and the process temperatures being 39°C, 5°C, 6°C, 9°C and 20°C (cf. Example 1 of EP 547,658). Another method of preparation is disclosed in Example 5 of the above-mentioned EP 547,658. Another pre-mix was made but this time at 70°C. The pre-mix was passed through a C unit and then through two A units. The throughput was now 19 g/min. (filling C) or 8 g/min. (filling D). Exit temperatures were 50, 8, 16°C for filling C and 50, 14 and 21°C for filling D. The above-mentioned processes are rather complicated and have a major disadvantage, i.e. the residence time of the emulsion in the system is too long (at least 2 minutes can be calculated from the data of EP 547,658); therefore, the emulsions are subjected to an inappropriate shear at an inappropriate temperature for too long a time. This results in the formation of emulsions having an acceptable product performance, however, this performance does not yet meet the high quality-standards required by the confectionery manufacturers.

From US 4,410,552 encapsulated fillings are known, wherin the core has a semiplastic consistency with a density of 1-1.25 g/cm³, while the coating is an expanded fat based jacket with a density of 0.2-1.0 g/cm³, wherein the jacket is a mixture of fat, sugar, colloid and water. Nothing is disclosed about a process for preparing fat continuous, low fat emulsions.

According to US 4,849,243 low fat water-in-oil emulsions can be made by forming an aqueous phase, containing a thickener and mixing this thickened water phase with an oil phase and cooling of the mass obtained. The mass is then worked under high sheer (at least 1000 rpm) during a residence time of less than 1 min. in a vessel separate from the heat exchanges.

We found that products having a better performance (in particular stability, more particular: stability upon spreading, oral mouthfeel, full fat like-sensation) can be obtained by performing the following process comprising the steps of :
(1) forming a water-continuous fat emulsion having the composition :
   10-30 wt.% preferably 15-25 wt% of fat;
   5-57 wt.% preferably 15-40 wt% of H₂O,
   13-85 wt.% of remainder, being at least one compound from the group consisting of acidity regulator (controller), thickener, preferably a non-gelling thickener, bulking agent, emulsifier, sweetener, flavour, colorant, humectant and preservative, by mixing the components at a temperature above the melting point of the fat;
(2) cooling the emulsion, using a shear of 30-1500 S⁻¹, preferably 100-800 S⁻¹, applying a residence time of less than 2 minutes, preferably less than 1.5 minute, more preferably from 1-90 seconds, most preferably from 10-75 seconds, the residence time being defined as the time that the emulsion is subjected to cooling, using shear, while phase inversion occurs.

The shear being defined as: $\frac{\text{tipseed of knive}}{\text{annnular gap}}$

The cooling step (2) is preferably carried out by using one or more A units. The conditions applied for the cooling in step (2) should be such that no more than 20 wt.% of α-phase fat is formed.

Step (1) is performed at a temperature above ambient, preferably between 35 and 85°C.

The fats that can be applied may be selected from a wide range of vegetable and animal fats. It is, however, preferred that the fat has a melting point between 35 and 75°C. In this way, the fat is present as a liquid in the pre-mix, facilitating the formation of the water-continuous emulsion. Preferred fats have a solid content at 20°C of at least 17 (NMR pulse; not stabilized, cf: EP 547,658 A1, page 4, line 42).

Because of the fact that fats rich in behenic acid residues are believed to be low-calorie fats, we prefer the use of fats containing at least 15 wt.% of behenic acid. Preferred examples thereof are triglycerides rich in BUP and/or BUU (B= behenic, U = unsaturated fatty acid with at least 18 C-atoms, P= palmitic). These fats are described in our co-pending European Patent Application 94300631.2

The emulsions we make preferably contain :
15-25 wt.% of fat
15-40 wt.% of water
balance remainder.

Although the remainder can be made from at least one compound, selected from the group consisting of acidity regulator, thickener, bulking agent, emulsifier, sweetener, flavour, colorant, humectant and preservative, it will be evident that some of these components (e.g. acidity regulator, bulking agent, emulsifier, flavour, colorant and preservative) will only be present in small amounts and mainly in combination with functionally effective amounts of thickener, sweetener or humectant. Functionally effective amounts are those amounts that provide the required functionality to the emulsion. Amounts of 10-60 wt% (on total product) of thickener and/or sweetener and/or humectant result in very good products.

The above-mentioned process can be used in the preparation of low-fat emulsions for all kinds of food applications. However, very conveniently, low-calorie confectionery filling compositions are prepared by mixing of 10-30 parts of a vegetable fat selected or derived from soft fractions of cocoa butter, illipe, shea, palm, sal, soybean, cottonseed, palmkernel, coconut, rapeseed and sunflower with 5-57 parts by weight of water and 13-85 parts by weight of a mixture of thickeners selected from polydextrose and maltodextrin, and sweeteners so that the ratio :$\frac{\text{polydextrose + maltodextrin + sweetener}}{\text{water}} \text{= 2-9}$ and subjecting the water-continuous emulsion thus obtained to cooling.

In the above compositions the acidity regulator (controller), the thickener, the bulking agent, the emulsifier, the sweetener, the flavour, the colorant, the humectant and the preservative that can be applied are the same as those laid down in EP 547,658. Therefore, the content of this EP 547,658 should be considered to be incorporated in this application.

A typical example of an acidity regulator is citric acid. Suitable thickeners that can be applied are: proteins, e.g. gelatin, hydrolyzed gelatin, casein, caseinates, vegetable proteins or denatured proteins form any known source, carbohydrates, e.g. potato starch, corn starch, maize starch, tapioca starch, xanthan gum, the different carrageenan gums, pectin, agar, polydextroses, maltodextrins, hydrolyzed starches and modified starches.

As bulking agent are mentioned in EP 547,658: powdered or microcrystalline cellulose, insoluble fibres, such as cocoa powder, plant fibres, such as fibruline®, Avicel®, oat fibres or mixtures thereof. Emulsifiers that can be used are: monoglycerides, such as hymonos (Quest International), lecithins, DATA esters (= diacetyl tartaric acid esters), lactodans (= glycerol lactic esters) or mixtures thereof.

Sweeteners that are useful can be selected from: sucrose, lactose, fructose, glucose, but also high-intensity sweeteners, such as aspartame, saccharin, acesulfame-K, sucralose, or alitame. Humectant which are useful are: glycerol and hygroscopic, food-grade, inorganic or organic salts. Preservative can be selected from: sorbate salts, benzoate salts, ascorbic acid, urea or its derivatives.

A factor which has a positive contribution to the product performance is the use of a mixture of polydextrose and maltodextrin as the thickener. Therefore, these components are applied in amounts combined with the sweetener, if present, so that$\frac{\text{polydextrose + maltodextrin + sweetener}}{\text{water}} \text{= 2-9.}$

The type of polydextrose and maltodextrin that can be applied is the same as that disclosed in EP 547,658.

Aerated confectionery fillings can be obtained by incorporation of 1-35 vol% (on volume of the total filling) of an inert gas, such as N₂ or N₂O. Also solids of particular matter with a particle size between 0.1-200 µm, preferably 1-25 µm can be incorporated in our filings. Examples being: cocoa powder, TiO₂, colorants and opacifiers.

The process according to the invention can also be applied in the preparation of a low-fat spread. In that case, the remainder cannot be a sweet remainder. Accordingly, our invention also concerns a process for the preparation of a low-fat spread, wherein a low-fat spread is made by :
(1) mixing 10-30 parts of vegetable fat with 5-57, preferably 25-45 parts of water and 13-85 parts of a non-sweet remainder,
(2) whereupon the water-continuous emulsion thus obtained, comprising 10-30 wt.% of fat, 5-57 wt.%, preferably 25-45 wt.% of water and 13-85 wt.% of non-sweet remainder, is cooled.
However it is also possible to prepare low fat spreads from a remainder that contains sweeteners. In that instance a sweetener suppressor should be added to the emulsion. Very suitable sweeteners suppressors are fenoxy-low-carbon acid derivatives. A commercial example of this group is Cypha ® from Tate and Lyle. This component is effective when added in amounts of 10-1000 ppm, in particular 50-300 ppm (on total spread).

A clear benefit is obtained when the thickener is a non-gelling thickener, examples thereof being polydextrose, maltitol, lactitol, corn syrup, xanthan gum, non-gelling alginates, gum arabic, locust bean gum, cellulose-derivatives, inulin (= fructose oligomers) and guar gum. However, also some sweeteners, such as sugar or some humectants, such as glycerol can be applied as non-gelling thickener.

Depending on the N line of the fat applied, low-fat pastry spreads, low-fat wrapper spreads or low-fat cake emulsions can be made. The fats applied for each of these purposes have the following N lines :
- pastry fat :: N₂₀ = 20-70
- wrapper spread :: N₂₀ = 17-45; N₃₅ < 8
- cake emulsion :: N₂₀ = 15-35
N₃₀ = 2-16
N₃₅ = 0-10
N₅-N₁₅ = 30-70

Filled, encapsulated confectionery products, low-fat pastry spreads, low-fat wrapper spreads and low-fat cake emulsions made by using the fat emulsions according to the invention are also part of our invention.

### EXAMPLE I

### 1. Preparation of a low-calorie filling composition

The following recipe was applied :

| Aqueous phase | wt.% (calculated on total) |
|---|---|
| Water | 6.6 |
| K-sorbate | 0.1 |
| Acidity regulator (controller) | 0.04 |
| High fructose corn syrup (71% solids) | 39.2 |
| Litesse® (polydextrose) | 34 |
| | Sub-total 80 |

| Oil phase | |
|---|---|
| Emulsifier | 0.6 |
| Palm oil mid-fraction | 14.6 |
| Liquid vegetable oil with N₁₀ < 7.0 | 4.8 |
| | Sub-total 20 |

The above components were mixed at 60°C. A water-continuous fat emulsion with 18 wt% water, was obtained.

This warm emulsion was cooled, using two A units.
Throughput was 65 kg/hr; residence times were 35 sec. in the first and 35 sec. in the second A unit. Consequently the residence time for the inversion was 70 sec. The emulsion was subjected to a shear of 195 S⁻¹ and 120 S⁻¹ in the two A units.
Exit temperatures were : A1: 25°C; A2 20.5°C.

The amount of α-phase fat formed during cooling was 2 %

The product displayed the following Stevens value (at 20°C): after 1 day 350.

The Stevens value was measured by using a cylindrical probe travelling 10 mm at a rate of 1 mm/sec.

### EXAMPLE II

The following recipe was applied:

| Ag phase: | wt% (on total) |
|---|---|
| water | 6.8 |
| K-sorbate | 0.1 |
| acidity regulator | 0.04 |
| high fructose corn syrup (71% solids) | 38.7 |
| polydextrose | 34 |
| colorant | 0.3 |

| Oil phase: | |
|---|---|
| emulsifier | 1.0 |
| palm oil mid fraction | 14.3 |
| liquid vegetable oil | 4.7 |

The process according to example I was followed, however, using a microvotator-system.
Throughput was 3.8 Kg/hr.
The residence-times were: 27.0 sec. in A1 and 27.0 sec. in A2.
The shears were: 356 S⁻¹ in A1 and 360 S⁻¹ in A2.

- Exit temperatures:: A1: 19°C
A2: 15°C
The amount of α-phase fat was: 5%
The product displayed a Stevens-value of 610 after 15 days.

### EXAMPLE III

A low calory spread was prepared, using the following recipe:

| Ag phase | wt% (on total) |
|---|---|
| water | 6.8 |
| K-sorbate | 0.1 |
| colorant | 0.3 |
| acidity regulator | 0.04 |
| high fructose corn syrup | 38.7 |
| Litesse ® (polydextrose) | 34.0 |
| Cypha ® (Tate and Lyle) | 100 ppm |

| Fat phase: | |
|---|---|
| monoglycerides | 0.6 |
| palm oil mid fraction | 14.3 |
| liquid vegetable oil | 4.7 |

The process according to example II was followed, so using a microvotator.
Throughput was 3.8 kg/hr. The residence times were 27.0 sec. in A1 and 27.0 sec in A2. Shears applied were: 356 s⁻¹ in A1 and 360 s⁻¹ in A2. Exit temperatures: 19°C and 15°C.
The product coming from A2 was transferred through a B-unit, having a capacity of 100 gram.

The product obtained after the B-unit displayed a Stevens-value at 5°C after 1 day of about 1100 g/cm².
The product was an excellent wrapper low fat spread with superior organoleptic properties.

## Claims

1. Process for the production of fat-continuous, low-fat emulsions comprising the steps of :
(1) forming a water-continuous fat emulsion having the composition :
10-30 wt.% of fat;
5-57 wt.% preferably 15-40 wt% of H₂O,
13-85 wt.% of remainder, being at least one compound from the group consisting of acidity controller, thickener, preferably a non-gelling thickener, bulking agent, emulsifier, sweetener, flavour, colorant, humectant and preservative, by mixing the components at a temperature above the melting point of the fat;
(2) cooling the emulsion, using a shear of 30-1500 S⁻¹, preferably 100-800 S⁻¹, applying a residence time of less than 2 minutes, preferably from 1-90 seconds.

2. Process according to Claim 1, wherein step (2) is carried out by using one or more A units.

3. Process according to Claim 1 or 2, wherein the cooling conditions are such that no more than 20 wt.% of α-phase fat is formed.

4. Process according to Claims 1-3, wherein the mixing in step (1) is carried out at a temperature between 35 and 85°C.

5. Process according to Claims 1-4, wherein a fat is applied having a melting point between 35 and 75°C.

6. Process according to Claims 1-5, wherein the composition of the water-continuous emulsion in step (1) is set at :
15-25 wt.% of fat
15-40 wt.% of water
balance remainder.

7. Process according to Claims 1-6, wherein the fat applied is a fat containing at least 15 wt.% of behenic, more preferably being of the BUP and/or BUU-type; B = behenic, U = unsaturated fatty acid with at least 18 C-atoms; P = palmitic.

8. Process according to Claims 1-7, wherein a fat-continuous emulsion is prepared, the fat phase of which has a solid content at 20°C of at least 17 by NMR pulse, not stabilized.

9. Process according to Claims 1-8, wherein a low-calorie confectionery filling composition is prepared by mixing of 10-30 parts of a vegetable fat selected or derived from soft fractions of cocoa butter, illipe, shea, palm, sal, soybean, cottonseed, palmkernel, coconut, rapeseed and sunflower with 5-57 parts by weight of water and 13-85 parts by weight of a mixture of thickeners selected from polydextrose and maltodextrin, and sweeteners so that the ratio :$\frac{\text{polydextrose + maltodextrin + sweetener}}{\text{water}} \text{= 2-9}$ and subjecting the water-continuous emulsion thus obtained to a cooling according to Claim 1.

10. Process according to Claims 1-8, wherein a low-fat spread is made by :
(1) mixing 10-30 parts of vegetable fat with 5-57, preferably 25-45 parts of water and 13-85 parts of a non-sweet remainder,
(2) whereupon the water-continuous emulsion thus obtained, comprising 10-30 wt.% of fat, 5-57 wt.%, preferably 25-45 wt.% of water and 13-85 wt.% of non-sweet remainder is cooled according to Claim 1.

11. Low-fat pastry spread, wherein the spread is obtainable by the process of Claim 10 and contains a fat having an N-profile of N₂₀ = 20-70 by NMR pulse, not-stabilized.

12. Low-fat wrapper spread, wherein the spread is obtainable by the process of Claim 10 and contains a fat having an N-profile of N₂₀ = 17-45 and N₃₅ < 8.

13. Low-fat cake emulsion, wherein the emulsion is obtainable by the process of Claim 10 and contains a fat having an N-profile of N₂₀ = 15-35; N₃₀ = 2-16; N₃₅ = 0-10 and N₅-N₁₅ = 30-70.

## Patentansprüche

1. Verfahren zur Herstellung fettkontinuierlicher, fettarmer Emulsionen, umfassend die Schritte:
(1) Bilden einer wasserkontinuierlichen Fettemulsion mit der Zusammensetzung:
10 bis 30 Gew.-% Fett,
5 bis 57 Gew.-%, vorzugsweise 15 bis 40 Gew.-%, H₂O,
13 bis 85 Gew.-% Rest, der mindestens eine Verbindung aus der Gruppe ist, die besteht aus: Aziditätssteuerungsmittel, Verdickungsmittel, vorzugsweise nichtgelierendes Verdickungsmittel, massebildendes Mittel, Emulgator, Süßungsmittel, Aroma, Färbemittel, Feuchthaltemittel und Konservierungsmittel, durch Mischen der Komponenten bei einer Temperatur oberhalb des Schmelzpunktes des Fettes;
(2) Kühlen der Emulsion unter Anwendung einer Scherung von 30 bis 1500 s⁻¹, vorzugsweise 100 bis 800 s⁻¹, unter Anwenden einer Verweilzeit von weniger als 2 Minuten, vorzugsweise von 1 bis 90 Sekunden.

2. Verfahren nach Anspruch 1, bei dem Schritt (2) unter Verwendung einer oder mehrerer A-Units durchgeführt wird.

3. Verfahren nach Anspruch 1 oder 2, bei dem die Kühlbedingungen so beschaffen sind, daß nicht mehr als 20 Gew.-% eines α-Phasen-Fettes gebildet werden.

4. Verfahren nach den Ansprüchen 1 bis 3, bei dem das Mischen in Schritt (1) bei einer Temperatur zwischen 35 und 85°C durchgeführt wird.

5. Verfahren nach den Ansprüchen 1 bis 4, bei dem ein Fett mit einem Schmelzpunkt zwischen 35 und 75°C verwendet wird.

6. Verfahren nach den Ansprüchen 1 bis 5, bei dem die Zusammensetzung der wasserkontinuierlichen Emulsion in Schritt (1) eingestellt ist auf:
15 bis 25 Gew.-% Fett
15 bis 40 Gew.-% Wasser
Bilanz-Rest.

7. Verfahren nach den Ansprüchen 1 bis 6, bei dem das verwendete Fett ein Fett ist, das mindestens 15 Gew.-% Behensäure aufweist und insbesondere vom BUP- und/oder BUU-Typ ist (B = Behensäure, U = ungesättigte Fettsäure mit mindestens 18 C-Atomen, P = Palmitinsäure).

8. Verfahren nach den Ansprüchen 1 bis 7, bei dem eine fettkontinuierliche Emulsion hergestellt wird, deren Fettphase bei 20°C einen Feststoffgehalt von mindestens 17 (durch Puls-NMR, nicht stabilisiert) aufweist.

9. Verfahren nach den Ansprüchen 1 bis 8, bei dem eine kalorienarme Süßwarenfüllungszusammensetzung hergestellt wird, indem man 10 bis 30 Teile eines pflanzlichen Fettes, ausgewählt oder abgeleitet aus weichen Fraktionen von Kakaobutter, Illipe, Shea, Palme, Sal, Sojabohne, Baumwollsamen, Palmkern, Kokosnuß, Rapssamen und Sonnenblumen, mit 5 bis 57 Gewichtsteilen Wasser und 13 bis 85 Gewichtsteilen einer Mischung von Verdickungsmitteln, ausgewählt aus Polydextrose und Maltodextrin, und Süßungsmitteln, mischt, so daß das Verhältnis$\frac{\text{Polydextrose + Maltodextrin + Süßungsmittel}}{\text{Wasser}} \text{= 2-9}$ ist, und die so erhaltene wasserkontinuierliche Emulsion einem Kühlen gemäß Anspruch 1 unterwirft.

10. Verfahren nach den Ansprüchen 1 bis 8, bei dem ein fettarmer Aufstrich hergestellt wird durch:
(1) Mischen von 10 bis 30 Teilen eines pflanzlichen Fettes mit 5 bis 57, vorzugsweise 25 bis 45, Teilen Wasser und 13 bis 85 Teilen eines nicht-süßen Restes,
(2) worauf diese erhaltene wasserkontinuierliche Emulsion, die 10 bis 30 Gew.-% Fett, 5 bis 57 Gew.-%, vorzugsweise 25 bis 45 Gew.-%, Wasser und 13 bis 85 Gew.-% eines nicht-süßen Restes umfaßt, gemäß Anspruch 1 abgekühlt wird.

11. Fettarmer Gebäckaufstrich, bei dem der Aufstrich erhältlich ist nach dem Verfahren von Anspruch 10 und ein Fett mit einem N-Profil von N₂₀ = 20-70 (durch Puls-NMR, nicht-stabilisiert) enthält.

12. Fettarmer Blockaufstrich, bei dem der Blockaufstrich erhältlich ist nach dem Verfahren von Anspruch 10 und ein Fett mit einem N-Profil von N₂₀ = 17-45 und N₃₅ < 8 enthält.

13. Fettarme Kuchenemulsion, bei der die Emulsion erhältlich ist nach dem Verfahren von Anspruch 10 und ein Fett mit einem N-Profil von N₂₀ = 15-35, N₃₀ = 2-16, N₃₅ = 0-10 und N₅-N₁₅ = 30-70 enthält.

## Revendications

1. Procédé de production d'émulsions allégées en graisse continues en graisse comprenant les stades de:
(1) formation d'une émulsion grasse continue en eau ayant la composition :
10 à 30% en poids de graisse ;
5 à 57% en poids, de préférence 15 à 40% en poids de H₂O,
13 à 85% en poids de restant, étant au moins un composé parmi les agent de réglage d'acidité, épaississant, de préférence un épaississant non gélifiant, agent de volume, émulsifiant, édulcorant, arôme, colorant, humectant et conservateur, en mélangeant les composants à une température au dessus du point de fusion de la graisse ;
(2) refroidissement de l'émulsion, en utilisant un ci-saillement de 30 à 1500 s⁻¹, de préférence 100 à 800 s⁻¹, application d'une durée de séjour de moins de 2 minutes, de préférence 1 à 90 secondes.

2. Procédé selon la revendication 1, dans lequel on réalise le stade (2) en utilisant une ou plusieurs unités A.

3. Procédé selon la revendication 1 ou 2, dans lequel les conditions de refroidissement sont telles que pas plus de 20% en poids d'une graisse en phase alpha ne se forment.

4. Procédé selon la revendication 1 à 3, dans lequel on réalise le mélange au stade (1) à une température entre 35 et 85°C.

5. Procédé selon les revendications 1 à 4, dans lequel on utilise une graisse ayant un point de fusion entre 35 et 75°C.

6. Procédé selon les revendications 1 à 5, dans lequel la composition de l'émulsion continue en eau au stade (1) est réglée à
15-25% en poids de graisse
15-40% en poids d'eau
le restant en complément.

7. Procédé selon les revendications 1 à 6, dans lequel la graisse utilisée est une graisse contenant au moins 15% en poids de béhénique, mieux du type BIP et/ou BII ; B = béhénique, I = acide gras insaturé avec au moins 18 atomes de carbone ; P = palmitique.

8. Procédé selon les revendications 1 à 7, dans lequel on prépare une émulsion continue en graisse, la phase grasse de celle-ci ayant une teneur en solides à 20°C d'au moins 17 par impulsion RMN, sans stabilisation.

9. Procédé selon les revendications 1 à 8, dans lequel on prépare une composition de fourrage pour confiserie faiblement calorique en mélangeant 10 à 30 parties d'une graisse végétale choisie parmi ou dérivée des fractions molles de beurre de cacao, illipé, karité, palmier, sal, soja, graine de coton, coeur de palmier, coprah, colza et tournesol avec 5 à 57 parties en poids d'eau et 13 à 85 parties en poids d'un mélange d'épaississants choisi parmi les polydextrose et maltodextrine et d'édulcorants de sorte que le rapport :$\text{polydextrose + maltodextrine + édulcorant/eau = 2-9}$ et en soumettant l'émulsion continue en eau ainsi obtenue à un refroidissement selon la revendication 1.

10. Procédé selon les revendications 1 à 8, dans lequel on prépare une pâte à tartiner allégée en graisse par :
(1) mélange de 10 à 30 parties d'une graisse végétale avec 5 à 57, de préférence 25 à 45 parties d'eau et 13 à 85 parties d'un restant non sucré,
(2) après quoi on refroidit selon la revendication 1 l'émulsion continue en eau ainsi obtenue, comprenant 10 à 30% en poids de graisse, 5 à 57% en poids, de préférence 25 à 45% en poids d'eau et 13-85% en poids d'un restant non sucré.

11. Pâte à tartiner pour pâtisserie allégée en graisse, dans laquelle on peut obtenir la pâte à tartiner par le procédé de la revendication 10 et qui contient une graisse ayant un profil N de N₂₀ = 20-70 par impulsion RMN, sans stabilisation.

12. Pâte à tartiner sous enveloppe allégée en graisse, dans laquelle on peut obtenir la pâte à tartiner par le procédé de la revendication 10 et qui contient une graisse ayant un profil N de N₂₀ = 17-45 et N₃₅ < 8.

13. Emulsion pour gâteaux allégée en graisse, dans laquelle on peut obtenir l'émulsion par le procédé de la revendication 10 et qui contient une graisse ayant un profil N de N₂₀ = 15-35 ; N₃₀ = 2-16 ; N₃₅ = 0-10 et N₅₋₁₅ = 30-70.
